# EUROPÄISCHE PATENTSCHRIFT

(11) **EP 4 367 781 B1**
(45) Veröffentlichungstag und Bekanntmachung des Hinweises auf die Patenterteilung: **11.12.2024**
(21) Anmeldenummer: 22738342.9
(22) Anmeldetag: 20.06.2022
(51) Int. Cl.: H02K 5/20, H02K 9/19, H02K 5/16

(54) **KÜHLMITTELVERSORGUNGSSYSTEM FÜR EINE ELEKTROMASCHINE**
COOLANT SUPPLY SYSTEM FOR AN ELECTRIC MACHINE
SYSTÈME D'ALIMENTATION EN AGENT DE REFROIDISSEMENT POUR UNE MACHINE ÉLECTRIQUE

(30) Priorität: 07.07.2021 DE 102021117520
(43) Veröffentlichungstag der Anmeldung: 15.05.2024
(73) Patentinhaber: Audi AG, 85045 Ingolstadt (DE)
(72) Erfinder: GLOEDE, Harald, 85104 Pförring (DE); PRÜTTING, Christian, 85092 Kösching (DE)
(74) Vertreter: Bierschneider, Walter
(86) Internationale Anmeldenummer: PCT/EP2022/066647
(87) Internationale Veröffentlichungsnummer: WO 2023/280553

(56) Entgegenhaltungen:
- EP-B1- 0 049 735
- DE-A1- 102010 047 507
- DE-A1- 102019 208 297
- US-A1- 2012 049 665

## Beschreibung

Die Erfindung betrifft ein Kühlmittelversorgungssystem für eine Elektromaschine in einem elektrisch betriebenen Fahrzeug nach dem Oberbegriff des Anspruches 1.

Eine solche Elektromaschine kann als nasslaufende Elektromaschine realisiert sein, in der der Stator, insbesondere die Wickelköpfe der Statorwicklungen, aktiv gekühlt wird.

Eine beispielhafte Elektromaschine weist in der Axialrichtung betrachtet zwischen der Rotor/Stator-Anordnung und einer Elektromaschinen-Gehäusewand einen freien Elektromaschinen-Raum auf. Dieser ist mit Kühlmittel beaufschlagt, um eine solche Statorkühlung zu gewährleisten. Die Elektromaschine weist eine Rotorwellen-Lageranordnung auf, in der die Rotorwelle in einer Lageröffnung eines Nabenabschnitts der Elektromaschinen-Gehäusewand über ein Drehlager drehbar gelagert ist. Die Lageröffnung ist nach gehäuseaußen mit einem Dichtelement abgedichtet. Dadurch ergibt sich ein Freiraum, der sich in Axialrichtung zwischen dem Drehlager und dem Dichtelement erstreckt. Der Freiraum ist nach radial innen von der Rotorwelle begrenzt und nach radial außen vom Nabenabschnitt der Elektromaschinen-Gehäusewand begrenzt.

Im Stand der Technik kann sich im Elektromaschinen-Betrieb die Rotorwelle und damit das Drehlager stark erwärmen. Aufgrund von unterschiedlichen wärmebedingten Ausdehnungen des Innenrings sowie des Außenrings des Drehlagers kann das Drehlager-Lagerspiel aufgebraucht werden, was nachteilig im Hinblick auf die Drehlager-Lebensdauer sowie die Schwingungsneigung der Lageranordnung ist.

Aus der DE 10 2019 207 323 A1 ist eine Elektromaschine für ein Fahrzeug bekannt. Aus der US 2015/0275715 A1, aus der DE 11 2012 003 305 T5 sind weitere Kühl-/Schmiersysteme für eine Elektromaschine bekannt. Die DE 10 2010 047 507 A1 offenbart einen gattungsgemäßen, ölgekühlten Motor/Generator für einen Kraftfahrzeugantriebsstrang. Aus der EP 0 049 735 B1 ist ein ölgekühlter Generator bekannt.

Die Aufgabe der Erfindung besteht darin, ein Kühlmittelversorgungssystem für eine Elektromaschine bereitzustellen, mit dem im Vergleich zum Stand der Technik eine betriebssichere Funktion des Drehlagers der Rotorwelle gewährleistet wird.

Die Aufgabe ist durch die Merkmale des Anspruches 1 gelöst. Bevorzugte Weiterbildungen der Erfindung sind in den Unteransprüchen offenbart.

Die Erfindung geht von einem Kühlmittelversorgungssystem für eine Elektromaschine aus. In der Elektromaschine ist, in der Axialrichtung betrachtet, zwischen der Rotor/Stator-Anordnung und einer Elektromaschinen-Gehäusewand ein freier Elektromaschinen-Raum bereitgestellt. Dieser wird im Elektromaschinen-Betrieb mit Kühlmittel beaufschlagt, um eine Statorkühlung zu bewirken. Das Kühlmittel kann als Öl realisiert sein und/oder eine Kühl- sowie eine Schmierfunktion aufweisen. Die Elektromaschine weist eine Rotorwellen-Lageranordnung auf, in der die Rotorwelle in einer Lageröffnung eines Nabenabschnitts der Elektromaschinen-Gehäusewand über ein Drehlager drehbar gelagert ist. Die Lageröffnung ist nach gehäuseaußen mit einem Dichtelement abgedichtet. Auf diese Weise ergibt sich ein Freiraum, der sich in der Axialrichtung zwischen dem Drehlager und dem Dichtelement erstreckt. Der Freiraum ist nach radial innen von der Rotorwelle begrenzt und nach radial außen vom Nabenabschnitt der Elektromaschinen-Gehäusewand begrenzt.

Gemäß dem Anspruch 1 sind für eine gesteigerte Kühlung des Drehlagers die folgenden Maßnahmen bereitgestellt: So weist die Elektromaschinen-Gehäusewand eine Kühlmittelverbindung auf, über die Kühlmittel vom Elektromaschinen-Raum in den Freiraum führbar ist. Erfindungsgemäß wird somit der Freiraum zusätzlich mit Kühlmittel beaufschlagt, um eine wirkungsvolle Kühlung des Drehlagers zu bewirken. Das Drehlager wird daher in der Axialrichtung betrachtet beidseitig gekühlt, und zwar einerseits von Kühlmittel aus dem Elektromaschinen-Raum und andererseits von Kühlmittel aus dem Freiraum.

In einer technischen Umsetzung kann die Kühlmittelverbindung einen Zulauf und einen Ablauf aufweisen. In der Elektromaschinen-Konstruktionslage erstreckt sich der Zulauf oberhalb des Drehlagers, während sich der Ablauf unterhalb des Drehlagers erstreckt. In diesem Fall kann das Kühlmittel unter Schwerkraft-Wirkung durch den Zulauf in den Freiraum geführt werden. Im weiteren Verlauf kann das Kühlmittel über den Ablauf unter Schwerkraft-Wirkung vom Freiraum in den Elektromaschinen-Raum rückgeführt werden.

Der Elektromaschinen-Raum kann in einem Kühlmittel-Hydraulikkreis eingebunden sein, in dem das Kühlmittel, insbesondere druckbeaufschlagt über Kühlmittel-Düsen von radial außen nach radial innen in den Elektromaschinen-Raum einspritzbar ist. Alternativ und/oder zusätzlich kann das Kühlmittel über Stator-Kanäle in den Elektromaschinen-Raum geführt werden. Das sich am Gehäuseboden der Elektromaschine unter Schwerkraft-Wirkung sammelnde Kühlmittel kann über eine Absaugung aus dem Gehäuseinneren in Richtung auf einen Kühlmitteltank geführt werden.

In dem oben beschriebenen Kühlmittel-Hydraulikkreis kann sich im Elektromaschinen-Raum sich im Elektromaschinen-Betrieb ein Kühlmittel/Luft-Gemisch bilden, dass sich in einer Wirbelströmung um die Rotorwelle bewegt. In gleicher Weise kann sich auch im Freiraum ein Kühlmittel/Luft-Gemisch sich in Wirbelströmung um die Rotorwelle bewegen.

Für eine ausreichende Kühlung des Drehlagers ist eine wirkungsvolle Kühlmittel-Versorgung des Freiraums von Bedeutung. Hierzu weist die Elektromaschinen-Gehäusewand erfindungsgemäß eine Fang-Kontur auf. An der Fang-Kontur sammelt sich im Elektromaschinen-Raum vorhandenes Kühlmittel. Das an der Fang-Kontur gesammelte Kühlmittel wird über den Zulauf zum Freiraum geführt.

Erfindungsgemäß weist die Fangkontur einen von der Innenseite der Elektromaschinen-Gehäusewand in Richtung Elektromaschinen-Raum in Axialrichtung abragenden Axialsteg auf. Dieser erstreckt sich zumindest teilweise in Umfangsrichtung. Vom Axialsteg ist erfindungsgemäß zumindest eine Fang-Rippe nach radial außen hochgezogen. Zwischen dem Axialsteg und der Fang-Rippe wird ein Inneneckbereich aufgespannt, in den sich Kühlmittel-Tropen sammeln können. Der Zulauf mündet mit einer Zulauföffnung unmittelbar in den Inneneckbereich hinein. Der Inneneckbereich ist insbesondere entgegen der Strömungsrichtung der Wirbelströmung offen gestaltet, um eine ausreichende Kühlmittelmenge einzufangen.

In einer bevorzugten Ausführungsvariante kann die Fang-Kontur für eine Drehrichtungsumkehr der Elektromaschine ausgelegt sein. In diesem Fall kann die Fang-Kontur zwei Inneneckbereiche aufweisen. Diese können in Umfangsrichtung voneinander beabstandet sein. Der erste Inneneckbereich kann in Umfangsrichtung betrachtet im Uhrzeigersinn offen gestaltet sein. Im Gegensatz dazu kann der zweite Inneneckbereich im Gegenuhrzeigersinn offen gestaltet sein.

Der Freiraum ist nach radial außen vom Innenumfang des Nabenabschnitts der Elektromaschinen-Gehäusewand begrenzt. Ein unterer InnenumfangsBereich bildet einen Freiraum-Boden. Im Freiraum-Boden kann ein Kühlmittel-Reservoir ausgebildet sein, in dem sich Kühlmittel sammelt und über den Ablauf abführbar ist. Bevorzugt kann eine Überlaufkante der Ablauföffnung um eine Überlauf-Höhe vom Freiraum-Boden beabstandet sein. Sobald ein Kühlmittel-Spiegel bis zur Überlaufkante ansteigt, wird Kühlmittel über den Ablauf in Richtung Elektromaschinen-Raum abgeführt.

Das Drehlager kann konventionell aufgebaut sein, und zwar aus einem auf der Rotorwelle sitzenden Lagerinnenring, einem auf dem Innenumfang des Nabenabschnitts sitzenden Lageraußenring sowie zwischengeordneten Wälzkörpern. Das Drehlager begrenzt den Freiraum in Axialrichtung nach gehäuseinnen. Ein übermäßig großer Kühlmittel-Rückfluss vom Kühlmittel-Reservoir über das Drehlager in Richtung Elektromaschinen-Raum kann zu einer erhöhten Lagerreibung führen. Vor diesem Hintergrund ist die Überlaufkante der Ablauföffnung um einen Höhenversatz unterhalb des Lageraußenring-Innenumfangs des Drehlagers positioniert. Auf diese Weise wird ein Kühlmittel-Rückfluss über das Drehlager in den Elektromaschinen-Raum gehemmt.

In einer konkreten Ausführungsvariante kann in der Lageranordnung ein Wellenende der Rotorwelle drehgelagert sein. Die Elektromaschinen-Gehäusewand kann zudem zweiteilig aufgebaut sein, und zwar mit einem radial äußeren Wandteil, das einen Bauteil-Zugang begrenzt, und einem Lagerschild, mit dem der Bauteil-Zugang schließbar ist. In diesem Fall ist die Lageranordnung unmittelbar im Lagerschild angeordnet.

Nachfolgend ist ein Ausführungsbeispiel der Erfindung anhand der beigefügten Figuren beschrieben. Es zeigen:
- Fig. 1: In einer vergrößerten Teilschnittdarstellung eine Elektromaschine;
- Fig. 2: eine an einem Lagerschild ausgebildete Fangkontur; und
- Fig. 3: in einer grob schematischen Darstellung ein nicht von der Erfindung umfasstes Vergleichsbeispiel einer Elektromaschine.

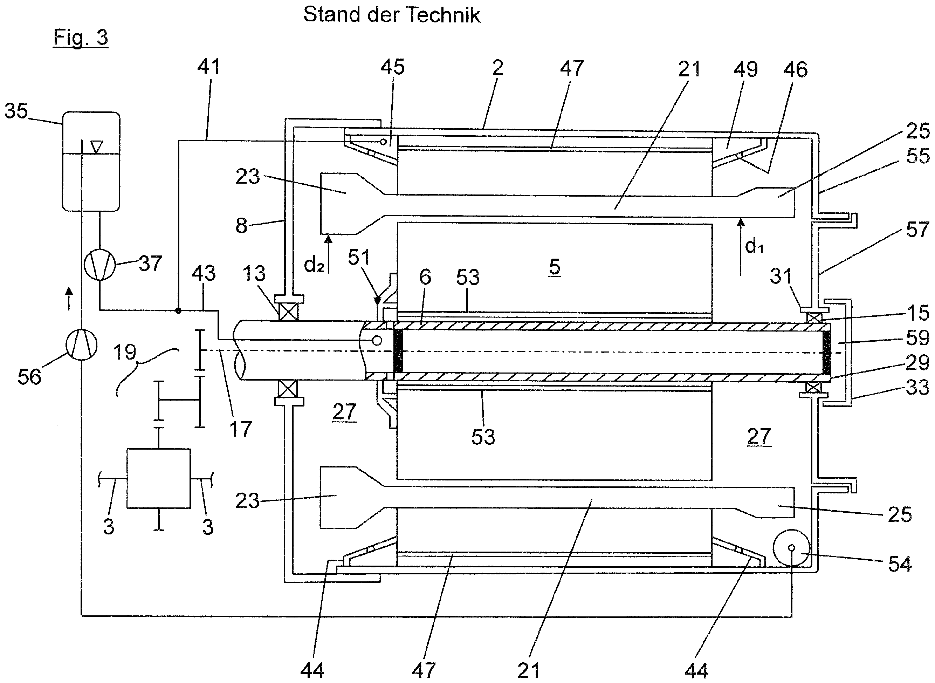

Für ein einfacheres Verständnis der Erfindung wird zunächst Bezug auf die Figur 3 genommen, in der in grob schematischer Darstellung eine Antriebsvorrichtung für eine Fahrzeugachse eines zweispurigen Fahrzeugs angedeutet ist. Die Antriebsvorrichtung weist eine Elektromaschine auf, die beispielhaft im Quereinbau achsparallel zu den, zu den Fahrzeugrädern geführten Flanschwellen 3 angeordnet ist. In einem Gehäuse 2 der Elektromaschine ist Stator 4 mit einem damit zusammenwirkenden Rotor 5 angeordnet. Die Rotorwelle 6 ist an axial gegenüberliegenden Gehäusewänden 8, 9 des Elektromaschinen-Gehäuses 2 in Lageröffnungen unter Zwischenordnung von Drehlagern 13, 15 drehgelagert.

Die Rotorwelle 6 der Elektromaschine kann zum Beispiel über eine Passverzahnung drehfest mit einer Getriebeeingangswelle 17 einer Getriebeanordnung 19 verbunden sein, die auf die beiden Flanschwellen 3 abtreibt.

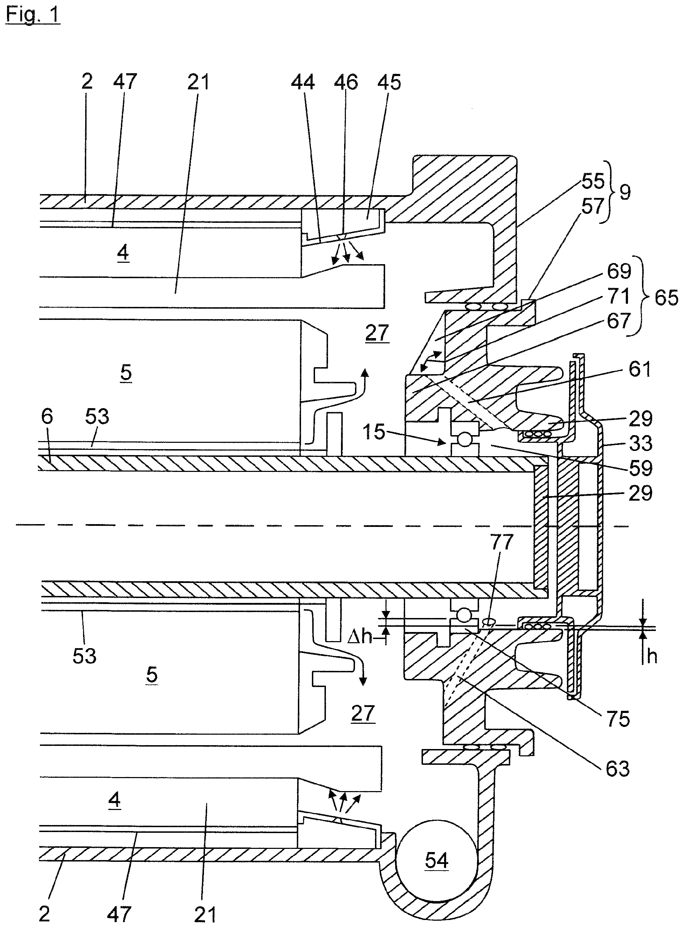

In der Figur 1 weist der Stator 4 eine Vielzahl von Statorwicklungen auf, von denen in der Figur 1 lediglich zwei Statorwicklungen 21 angedeutet sind. Jede Statorwicklung 21 weist axial beidseitig jeweils einen Wickelkopf 23, 25 auf, der in einen Elektromaschinen-Raum 27 einragt. Jeder Elektromaschinen-Raum 27 ist in einem später beschriebenen Öl-Hydraulikkreis eingebunden, mit dessen Hilfe der jeweilige Elektromaschinen-Raum 27 mit Öl beaufschlagbar ist, um die Wickelköpfe 23, 25 des Stators 4 zu kühlen. In jedem der Elektromaschinen-Räume 27 bewegt sich ein Öl/Luftgemisch in Wirbelströmung um die sich mit hoher Drehzahl drehende Rotorwelle 6.

In der in der Figur 3 rechten Lageranordnung ist ein Wellenende 29 der Rotorwelle 6 drehgelagert. Das Wellenende 29 der Rotorwelle 6 ist durch einen Nabenabschnitt 31 der Gehäusewand 9 geführt, und zwar unter Zwischenordnung des Drehlagers 15. Die vom Nabenabschnitt 31 begrenzte Lageröffnung ist nach gehäuseaußen von einem deckelförmigen Dichtelement 33 abgedichtet.

Der Öl-Hydraulikkreis weist einen Öltank 35 auf, der über eine Saugleitung mit einer Saugpumpe 37 verbunden ist. Von der Saugpumpe 37 führt eine Druckleitung zu Öl-Versorgungsleitungen 41, 43. Mittels der Versorgungsleitung 41 wird Öl in einen radial äußeren umlaufenden Ringspalt 45 gespeist. Von dort wird das Öl über radial äußere Statorkanäle 47 zu einem weiteren Ringspalt 49 im rechten Elektromaschinen-Raum 27 geführt. Die beiden Ringspalte 45, 49 sind über Ölspritzringe 44 vom jeweiligen Elektromaschinen-Raum 27 getrennt. Jeder der Ölspritzringe 44 weist in Umfangsrichtung verteilte Düsen 46 auf, über die Öl in den jeweiligen Elektromaschinen-Raum 27 einspritzbar ist.

Mittels der Versorgungsleitung 43 wird Öl durch die Rotorwelle 6 geführt und über eine Strömungsverbindung 51 in radial inneren Statorkanälen 53 bis in den rechten Elektromaschinen-Raum 27 geleitet. Am Gehäuseboden des Elektromaschinen-Gehäuses befindet sich in der Figur 3 eine Absaugung 54, über die sich am Gehäuseboden sammelndes Öl mit Hilfe einer Rückführpumpe 56 in den Öltank 35 rückführbar ist.

Wie aus der Figur 3 weiter hervorgeht, begrenzen die in den rechten Elektromaschinen-Raum 27 einragenden Wickelköpfe 25 einen Innenumfang, der auf einem Durchmesser d1 liegt. Die in den linken Elektromaschinen-Raum 27 einragenden Wickelköpfe 23 begrenzen einen Innenumfang, der auf einem Durchmesser d2 liegt, der kleiner bemessen ist als der Durchmesser d1. Die Wickelköpfe 25 befinden sich auf der Schaltseite der Elektromaschine, an der die (nicht gezeigte) Leistungselektronik angeschlossen ist, während sich die Wickelköpfe 23 auf der Gegenschaltseite befinden.

Um beim Elektromaschinen-Zusammenbau einen störkonturfreien Einbau des Rotors 5 mitsamt Rotorwelle 6 zu gewährleisten, ist in der Figur 3 die Elektromaschinen-Gehäusewand 9 zweiteilig aufgebaut, und zwar aus einem radial äußerem Wandteil 55, das einen Bauteil-Zugang begrenzt, und einem radial inneren Lagerschild 57, mit dem der Bauteil-Zugang schließbar ist. Der Rotor 5 wird Die Lageranordnung zur Drehlagerung des Wellenendes 29 der Rotorwelle 6 ist unmittelbar in dem Lagerschild 57 ausgebildet. Der Bauteil-Zugang ist so bemessen, dass der Rotor 5 störkonturfrei in das Elektromaschinen-Gehäuse 2 einsetzbar ist. Nach erfolgtem Setzprozess wird der Lagerschild 57 an dem radial äußeren Wandteil 55 montiert.

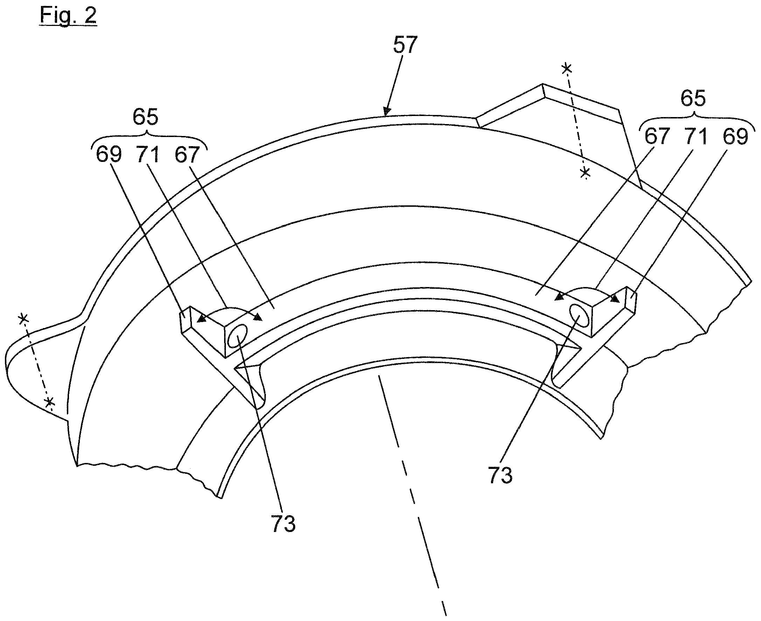

Ein Kern der Erfindung betrifft die Geometrie des Lagerschilds 57, wie sie aus der Figur 1 und 2 hervorgeht. Demzufolge weist der Lagerschild 57 eine Ölverbindung auf, über die Öl vom rechten Elektromaschinen-Raum 27 in den Freiraum 59 führbar ist. Der Freiraum 59 erstreckt sich in den Figuren 1 oder 3 in Axialrichtung zwischen dem Drehlager 15 und dem deckelförmigen Dichtelement 33. Zudem ist der Freiraum 59 nach radial außen vom Nabenabschnitt 31 der Gehäusewand 9 begrenzt und nach radial innen von dem Wellenende 29 der Rotorwelle 6 begrenzt.

Die Ölverbindung weist in der Figur 1 einen Öl-Zulauf 61 und einen Öl-Ablauf 63 auf. Der Öl-Zulauf 61 befindet sich in der Figur 1 oberhalb des Freiraums 59, während sich der Öl-Ablauf 63 unterhalb des Freiraums 59 befindet. Im Elektromaschinen-Betrieb kann daher Öl unter Schwerkraft-Wirkung vom Elektromaschinen-Raum 27 über den Öl-Zulauf 61 in den Freiraum 59 geführt werden. Im weiteren Verlauf kann das Öl über den Öl-Ablauf 63 unter Schwerkraft-Wirkung vom Boden des Freiraums 59 in den Elektromaschinen-Raum 27 rückgeführt werden.

In der Figur 2 ist am Freiraum-Boden ein Öl-Reservoir ausgebildet, in dem sich das Öl sammelt und über den Öl-Ablauf 63 abführbar ist. Gemäß der Figur 2 weist eine Ablauföffnung des Öl-Ablaufs 63 eine Überlaufkante 77 auf, die um eine Überlauf-Höhe h vom Freiraum-Boden beabstandet ist. Die Überlaufkante 77 der Ablauföffnung ist dabei um einen Höhenversatz Δh unterhalb eines Innenumfangs des Lageraußenrings 75 des Drehlagers (15) positioniert. Auf diese Weise ist ein direkter Kühlmittel-Rückfluss über das Drehlager 15 in den Elektromaschinen-Raum 2 gehemmt.

Wie aus der Figur 1 oder 2 weiter hervorgeht, weist die Gehäusewand 9 an ihrer Innenseite eine Fang-Kontor 65 auf. An der Fang-Kontur 65 sammeln sich im Elektromaschinen-Raum 27 vorhandene Öl-Tropfen. Das gesammelte Öl wird über den Öl-Zulauf 61 zum Freiraum 59 geführt. In den Figuren 1 und 2 weist die Fang-Kontur 65 einen von der Gehäusewand-Innenseite axial in Richtung Elektromaschinen-Raum 27 abragenden Axialsteg 67 auf. Dieser erstreckt sich teilweise in Umfangsrichtung. Vom Axialsteg 67 sind gemäß der Figur 1 oder 2 nach radial außen zwei Fang-Rippen 69 hochgezogen. Die beiden Fang-Rippen 69 sind in Umfangsrichtung voneinander beabstandet. Zwischen jeder der Fang-Rippen 69 und dem Axialsteg 67 wird ein Inneneckbereich 71 aufgespannt. Im Inneneckbereich 71 sammelt sich das Öl. Zudem mündet der Öl-Zulauf 61 mit einer Zulauföffnung 73 in den Inneneckbereich 71.

Die in der Figur 2 gezeigte Fang-Kontur 65 ist für eine Drehrichtungsumkehr der Elektromaschine ausgelegt. Hierzu sind die beiden Inneneckbereiche 71 jeweils in unterschiedlichen Umfangsrichtungen offen gestaltet. Das heißt, dass ein erster Inneneckbereich 71 entgegen der Strömungsrichtung der Wirkbelströmung im Elektromaschinen-Raum 27 offen gestaltet ist, und zwar unabhängig von der Elektromaschinen-Drehrichtung.

### BEZUGSZEICHENLISTE

- 2: Elektromaschinen-Gehäuse
- 3: Flanschwellen
- 4: Stator
- 5: Rotor
- 6: Rotorwelle
- 8,9: Gehäusewand
- 11: Lageröffnung
- 13, 15: Drehlager
- 17: Getriebeeingangswelle
- 19: Getriebeanordnung
- 21: Statorwicklung
- 23, 25: Wickelkopf
- 27: Elektromaschinen-Raum
- 29: Wellenende
- 31: Nabenabschnitt
- 33: Dichtelement
- 35: Kühlmitteltank
- 37: Saugpumpe
- 41, 43: Versorgungsleitungen
- 44: Ölspritzring
- 45: Ringspalt
- 46: Düsen
- 47: radial äußerer Statorkanal
- 49: Ringspalt
- 51: Strömungsverbindung
- 53: radial innerer Statorkanal
- 54: Absaugung
- 55: radial äußeres Wandteil
- 56: Rückführpumpe
- 57: Lagerschild
- 59: Freiraum
- 61: Zulauf
- 63: Ablauf
- 65: Fang-Kontur
- 67: Axialsteg
- 69: Fang-Rippe
- 71: Inneneckbereich
- 73: Zulauf-Öffnung
- 75: Lageraußenring
- 77: Überlaufkante

## Patentansprüche

1. Kühlmittelversorgungssystem für eine Elektromaschine, in der in Axialrichtung zwischen der Rotor/Stator-Anordnung und einer Elektromaschinen-Gehäusewand (9) ein freier Elektromaschinen-Raum (27) bereitgestellt ist, der mit Kühlmittel beaufschlagbar ist, wobei die Elektromaschine eine Rotorwellen-Lageranordnung aufweist, in der die Rotorwelle (6) in einem Nabenabschnitt (31) der Elektromaschinen-Gehäusewand (9) über ein Drehlager (15) drehgelagert ist, wobei die Lageröffnung nach gehäuseaußen mit einem Dichtelement (33) abgedichtet ist, und zwar unter Bildung eines Freiraums (59) zwischen dem Drehlager (15) und dem Dichtelement (33), wobei
die Elektromaschinen-Gehäusewand (9) eine Kühlmittelverbindung (61, 63) aufweist, über die Kühlmittel vom Elektromaschinen-Raum (27) in den Freiraum (59) führbar ist,
und wobei
die Elektromaschinen-Gehäusewand (9) eine Fang-Kontur (65) aufweist, an der sich im Elektromaschinen-Raum (27) vorhandenes Kühlmittel sammelt und über den Zulauf (61) zum Freiraum (59) führbar ist,
**dadurch gekennzeichnet,**
**dass** zur Bereitstellung des Inneneckbereichs (71) die Fang-Kontur (65) einen von der Innenseite der Elektromaschinen-Gehäusewand (9) in Richtung Elektromaschinen-Raum (27) in Axialrichtung abragenden Axialsteg (67) aufweist, der sich zumindest teilweise in Umfangsrichtung erstreckt,
und
**dass** vom Axialsteg (67) zumindest eine Fang-Rippe (69) nach radial außen hochgezogen ist.

2. Kühlmittelversorgungssystem nach Anspruch 1, **dadurch gekennzeichnet, dass** die Kühlmittelverbindung einen Zulauf (61) und einen Ablauf (63) aufweist, und dass insbesondere das Kühlmittel über den Zulauf (61), insbesondere unter Schwerkraft-Wirkung, in den Freiraum (59) führbar ist, und/oder dass das Kühlmittel über den Ablauf (63), insbesondere unter Schwerkraft-Wirkung, vom Freiraum (59) in den Elektromaschinen-Raum (27) rückführbar ist.

3. Kühlmittelversorgungssystem nach Anspruch 1 oder 2, **dadurch gekennzeichnet, dass** der Elektromaschinen-Raum (27) in einem Hydraulikkreis eingebunden ist, mittels dem Kühlmittel in den Elektromaschinen-Raum (27) führbar ist, und dass das sich am Gehäuseboden der Elektromaschine unter Schwerkraft-Wirkung sammelnde Kühlmittel über eine Absaugung (54) aus dem Gehäuseinneren führbar ist.

4. Kühlmittelversorgungssystem nach einem der vorhergehenden Ansprüche, **dadurch gekennzeichnet, dass** die Fang-Kontur (65) zumindest einen Inneneckbereich (71) aufweist, der bevorzugt entgegen der Strömungsrichtung der Kühlmittel-Wirbelströmung offen gestaltet ist.

5. Kühlmittelversorgungssystem nach einem der vorhergehenden Ansprüche, **dadurch gekennzeichnet, dass** zwischen dem Axialsteg (67) und der Fang-Rippe (69) der Inneneckbereich (71) aufgespannt ist, in dem sich das Kühlmittel sammelt, und dass insbesondere der Zulauf (61) mit einer Zulauföffnung (73) in den Inneneckbereich (71) mündet.

6. Kühlmittelversorgungssystem nach einem der vorhergehenden Ansprüche, **dadurch gekennzeichnet, dass** die Fang-Kontur (65) unabhängig von der Drehrichtung der Elektromaschine wirkt, und dass insbesondere die Fang-Kontur (65) zwei Inneneckbereiche (71) aufweist, die in Umfangsrichtung voneinander beanstandet sind, und dass der erste Inneneckbereich (71), in Umfangsrichtung betrachtet, im Uhrzeigersinn offen gestaltet ist sowie der zweite Inneneckbereich (71) im Gegenuhrzeigersinn offen gestaltet ist.

7. Kühlmittelversorgungssystem nach einem der vorhergehenden Ansprüche, **dadurch gekennzeichnet, dass** am Freiraum-Boden ein Kühlmittel-Reservoir ausgebildet ist, in dem sich Kühlmittel sammelt und über den Ablauf (63) abführbar ist, und dass insbesondere eine Überlaufkante (77) der Ablauföffnung des Ablaufes (63) um eine Überlauf-Höhe (h) vom Freiraum-Boden beabstandet ist, und dass insbesondere die Überlaufkante (77) der Ablauföffnung um einen Höhenversatz (Δh) unterhalb eines Lageraußenring-Innenumfangs des Drehlagers (15) positioniert ist, so dass ein Kühlmittel-Rückfluss über das Drehlager (15) in den Elektromaschinen-Raum (27) zumindest gehemmt ist.

8. Kühlmittelversorgungssystem nach einem der vorhergehenden Ansprüche, **dadurch gekennzeichnet, dass** in der Lageranordnung ein Wellenende (29) der Rotorwelle (6) drehgelagert ist, und/oder dass sich der Freiraum (59) in Axialrichtung zwischen dem Drehlager (15) und dem Dichtelement (33) erstreckt sowie nach radial innen von der Rotorwelle (6) begrenzt ist und/oder nach radial außen vom Nabenabschnitt (31) der Elektromaschinen-Gehäusewand (9) begrenzt ist.

9. Kühlmittelversorgungssystem nach einem der vorhergehenden Ansprüche, **dadurch gekennzeichnet, dass** die Elektromaschinen-Gehäusewand (9) zweiteilig aufgebaut ist, und zwar mit einem radial äußeren Wandteil (55), das einen Bauteil-Zugang begrenzt, und einem Lagerschild (57), mit dem der Bauteil-Zugang schließbar ist, und dass insbesondere die Lageranordnung in dem Lagerschild (57) angeordnet ist.

## Claims

1. Coolant supply system for an electric machine, in which electric machine a free electric machine space (27) is provided between the rotor/stator assembly and an electric machine housing wall (9) in the axial direction and has coolant introduced into it, wherein the electric machine has a rotor shaft bearing assembly in which the rotor shaft (6) is rotationally mounted in a hub portion (31) of the electric machine housing wall (9) by means of a rotary bearing (15), wherein the bearing opening is sealed off with respect to the housing exterior by way of a sealing element (33), specifically so as to form a free space (59) between the rotary bearing (15) and the sealing element (33),
wherein the electric machine housing wall (9) has a coolant connection (61, 63), by means of which coolant can be guided from the electric machine space (27) into the free space (59),
and wherein
the electric machine housing wall (9) has a catching contour (65) at which coolant present in the electric machine space (27) collects and can be guided to the free space (59) via the inlet (61),
**characterized in that**,
for providing the inner corner region (71), the catching contour (65) has an axial web (67) which protrudes from the inner side of the electric machine housing wall (9) in the direction of the electric machine space (27) in the axial direction and extends at least partially in the circumferential direction,
and
**in that** at least one catching rib (69) is raised radially outwards from the axial web (67).

2. Coolant supply system according to Claim 1,
**characterized in that**
the coolant connection has an inlet (61) and an outlet (63), and **in that** in particular the coolant can be guided into the free space (59) via the inlet (61), in particular under the action of gravity, and/or **in that** the coolant can be returned from the free space (59) into the electric machine space (27) via the outlet (63), in particular under the action of gravity.

3. Coolant supply system according to Claim 1 or 2,
**characterized in that**
the electric machine space (27) is incorporated in a hydraulic circuit, by means of which coolant can be guided into the electric machine space (27), and **in that** the coolant collecting at the bottom of the housing of the electric machine under the action of gravity can be guided out of the housing interior by means of a suction-extraction means (54).

4. Coolant supply system according to any of the preceding claims,
**characterized in that**
the catching contour (65) has at least one inner corner region (71), which is preferably designed to be open counter to the direction of flow of the coolant vortex flow.

5. Coolant supply system according to any of the preceding claims,
**characterized in that**
the inner corner region (71), in which the coolant collects, is stretched between the axial web (67) and the catching rib (69), and **in that** in particular the inlet (61) opens into the inner corner region (71) by way of an inlet opening (73).

6. Coolant supply system according to any of the preceding claims,
**characterized in that**
the catching contour (65) acts independently of the direction of rotation of the electric machine, and **in that** in particular the catching contour (65) has two inner corner regions (71) which are spaced apart from each other in the circumferential direction, and **in that** the first inner corner region (71) is designed to be open in the clockwise direction, as viewed in the circumferential direction, and the second inner corner region (71) is designed to be open in the anticlockwise direction.

7. Coolant supply system according to any of the preceding claims, **characterized in that**
a coolant reservoir is formed at the bottom of the free space, coolant collecting in the coolant reservoir and being discharged via the outlet (63), and **in that** in particular an overflow edge (77) of the outlet opening of the outlet (63) is spaced apart from the bottom of the free space by an overflow height (h), and **in that** in particular the overflow edge (77) of the outlet opening is positioned below a bearing outer ring inner circumference of the rotary bearing (15) by a vertical offset (Δh), so that return of coolant via the rotary bearing (15) into the electric machine space (27) is at least inhibited.

8. Coolant supply system according to any of the preceding claims,
**characterized in that**
a shaft end (29) of the rotor shaft (6) is rotatably mounted in the bearing assembly, and/or **in that** the free space (59) extends between the rotary bearing (15) and the sealing element (33) in the axial direction and is delimited radially to the inside by the rotor shaft (6) and/or is delimited radially to the outside by the hub portion (31) of the electric machine housing wall (9).

9. Coolant supply system according to any of the preceding claims,
**characterized in that**
the electric machine housing wall (9) is of two-part construction, specifically with a radially outer wall part (55), which delimits a component access point, and an end plate (57), with which the component access point can be closed, and **in that** in particular the bearing assembly is arranged in the end plate (57).

## Revendications

1. Système d'alimentation en agent de refroidissement destiné à une machine électrique dans laquelle
un espace libre (27) est ménagé dans la direction axiale entre l'ensemble rotor/stator de ladite machine électrique et une paroi de boîtier (9) de ladite machine électrique qui peut être alimenté en agent de refroidissement, la machine électrique comportant un ensemble de palier d'arbre de rotor dans lequel l'arbre de rotor (6) est monté de manière rotative dans une portion de moyeu (31) de la paroi de boîtier (9) de ladite machine électrique par le biais d'un palier rotatif (15), l'ouverture de palier étant étanchéifiée par rapport à l'extérieur du boîtier à l'aide d'un élément d'étanchéité (33), ce qui forme un espace libre (59) entre le palier rotatif (15) et l'élément d'étanchéité (33),
la paroi de boîtier (9) de ladite machine électrique comportant un raccord d'agent de refroidissement (61, 63) qui permet de guider l'agent de refroidissement de l'espace (27) de ladite machine électrique jusque dans l'espace libre (59),
et
la paroi de boîtier (9) de ladite machine électrique présentant un contour de capture (65) au niveau duquel l'agent de refroidissement présent dans l'espace (27) de la machine électrique est collecté et peut être guidé vers l'espace libre (59) par le biais de l'entrée (61), **caractérisé en ce que**
pour réaliser la zone d'angle intérieur (71), le contour de capture (65) comporte une nervure axiale (67) qui fait saillie dans la direction axiale depuis le côté intérieur de la paroi de boîtier (9) de ladite machine électrique en direction de l'espace (27) de ladite machine électrique et qui s'étend au moins partiellement dans la direction circonférentielle,
et
au moins une ailette de capture (69) est dressée vers le haut radialement vers l'extérieur depuis la nervure axiale (67).

2. Système d'alimentation en agent de refroidissement selon la revendication 1, **caractérisé en ce que** le raccord d'agent de refroidissement comporte une entrée (61) et une sortie (63), et en particulier l'agent de refroidissement peut être guidé jusque dans l'espace libre (59) par le biais de l'entrée (61), notamment sous l'effet de la gravité, et/ou l'agent de refroidissement peut être ramené de l'espace libre (59) jusque dans l'espace (27) de ladite machine électrique par le biais de sortie (63), notamment sous l'effet de la gravité.

3. Système d'alimentation en agent de refroidissement selon la revendication 1 ou 2, **caractérisé en ce que** l'espace (27) de ladite machine électrique est intégré dans un circuit hydraulique qui permet de guider l'agent de refroidissement jusque dans l'espace (27) de ladite machine électrique et l'agent de refroidissement qui s'accumule sur le fond de boîtier de la machine électrique sous l'effet de la gravité peut être guidé hors de l'intérieur de boîtier par une aspiration (54).

4. Système d'alimentation en agent de refroidissement selon l'une des revendications précédentes, **caractérisé en ce que** le contour de capture (65) comporte au moins une zone d'angle intérieur (71) qui est de préférence conçue pour être ouverte dans le sens opposé au sens d'écoulement tourbillonnaire d'agent de refroidissement.

5. Système d'alimentation en agent de refroidissement selon l'une des revendications précédentes, **caractérisé en ce que** la zone d'angle intérieur (71) dans laquelle l'agent de refroidissement s'accumule s'étend entre la nervure axiale (67) et l'ailette de capture (69), et en particulier l'entrée (61) débouche dans la zone d'angle intérieur (71) par une ouverture d'entrée (73).

6. Système d'alimentation en agent de refroidissement selon l'une des revendications précédentes, **caractérisé en ce que** le contour de capture (65) agit indépendamment du sens de rotation de la machine électrique et **en ce que**, en particulier, le contour de capture (65) comporte deux zones d'angle intérieur (71) qui sont espacées l'une de l'autre dans la direction circonférentielle, et **en ce que** la première zone d'angle intérieur (71), vue dans la direction circonférentielle, est conçue pour être ouverte dans le sens horaire et **en ce que** la deuxième zone d'angle intérieur (71) est conçue pour être ouverte dans le sens antihoraire.

7. Système d'alimentation en agent de refroidissement selon l'une des revendications précédentes, **caractérisé en ce qu'**un réservoir d'agent de refroidissement est formé sur le fond de l'espace libre, réservoir dans lequel l'agent de refroidissement s'accumule et peut être évacué par le biais de la sortie (63), et **en ce que**, en particulier, un bord de trop-plein (77) de l'ouverture de la sortie (63) est espacé du fond de l'espace libre par une hauteur de trop-plein (h), et **en ce que**, en particulier, le bord de trop-plein (77) de l'ouverture de sortie est positionné avec un décalage en hauteur (Δh) au-dessous d'une circonférence intérieure de bague de palier extérieure du palier rotatif (15), de manière à empêcher au moins un retour d'agent de refroidissement dans l'espace (27) de ladite machine électrique par le biais du palier rotatif (15).

8. Système d'alimentation en agent de refroidissement selon l'une des revendications précédentes, **caractérisé en ce qu'**une extrémité d'arbre (29) de l'arbre de rotor (6) est montée de manière rotative dans l'ensemble de palier et/ou **en ce que** l'espace libre (59) s'étend dans la direction axiale entre le palier rotatif (15) et l'élément d'étanchéité (33) et est limité radialement vers l'intérieur par l'arbre de rotor (6) et/ou radialement vers l'extérieur par la portion de moyeu (31) de la paroi de boîtier (9) de ladite machine électrique.

9. Système d'alimentation en agent de refroidissement selon l'une des revendications précédentes, **caractérisé en ce que** la paroi de boîtier (9) de ladite machine électrique est construite en deux parties, à savoir une partie de paroi radialement extérieure (55) qui limite l'accès aux composants et un flasque (57) qui permet de fermer l'accès aux composants et **en ce que**, en particulier, l'ensemble de palier est disposé dans le flasque (57).
